# EUROPEAN PATENT SPECIFICATION

(11) **EP 1 734 807 B1**
(45) Date of publication and mention of the grant of the patent: **14.05.2008**
(21) Application number: 05729596.6
(22) Date of filing: 23.03.2005
(51) Int. Cl.: A01G 9/16

(54) **IMPROVEMENTS IN AND RELATING TO ELECTRICALLY HEATED PLANT PROPAGATORS**
VERBESSERUNGEN VON ELEKTRISCH BEHEIZTEN PFLANZENVERMEHRUNGSVORRICHTUNGEN
AMELIORATIONS DE PROPAGATEURS DE VEGETAUX CHAUFFES ELECTRIQUEMENT ET S'Y RAPPORTANT

(30) Priority: 23.03.2004 GB 0406459
(43) Date of publication of application: 27.12.2006
(73) Proprietor: Ryan, Janice, Llanedeyrn Cardiff, South Wales CF23 9ND (GB); Ryan, Anthony, Llanedeyrn Cardiff, South Wales CF23 9ND (GB)
(72) Inventor: Ryan, Janice, Llanedeyrn Cardiff, South Wales CF23 9ND (GB); Ryan, Anthony, Llanedeyrn Cardiff, South Wales CF23 9ND (GB)
(74) Representative: Dunlop, Brian Kenneth Charles
(86) International application number: PCT/GB2005/001174
(87) International publication number: WO 2005/092079

(56) References cited:
- DE-A1- 10 311 559
- US-A- 2 715 794
- US-A- 2 963 819
- US-A- 3 106 801
- US-A- 3 606 697

## Description

This invention relates to electrically heated plant propagators, document US-A-3 106 801 discloses an electrically heated plant propagator with a transparent cover.

It is known to electrically heat plant propagators by providing under soil heating elements which keep the soil at a required temperature and which, in turn, keeps the air within the propagator also at an elevated temperature relative to the ambient temperature of the propagator's surroundings. In this way seeds can be induced to germinate before they would ordinarily do so and the growth of seedlings may subsequently be accelerated within the protection afforded by the usually transparent cover or lid.

A problem with such known plant propagators is that they are prone to induce condensation therewithin which may damage delicate plants and seedlings, cause e.g. mildew to build up, as well as reduce the transmission of light into the propagator, thereby reducing the amount of incoming ultraviolet radiation required in order for photosynthesis to take place. A further problem is that such under soil heating may provide local hotspots which could damage the roots of a plant and/or may dry out parts of the soil, thereby impeding the growth of roots.

The present invention is derived from the surprising realisation that the problem of the prior art may be obviated by heating the propagator in a different way which mimics the way in which vehicle windscreens are heated.

According to the claim 1 there is provided an electrically heated plant propagator comprising or including a transparent cover or lid, characterised in that the cover or lid has electrically conductive heating elements on or in the inner surface of the cover or lid, the heating elements being connectable to an electric power supply by which the heating elements, through resistive heating, heat the inside of the plant propagator when the cover or lid is closed.

Conveniently, the propagator includes a soil tray over which the transparent cover or lid may be placed.

Conveniently, a spacer collar is provided between the cover or lid and the upper rim of the soil tray, which collar is preferably transparent, and provides room for plants to grow upwards before entering the space afforded by the inside of the cover or lid. The spacer collar may be integral with the cover or lid, or it may be separate, or it may be integral with the tray.

The spacer collar may be integral with the cover or lid which is conveniently hinged thereto and electrically connectable therewith, such as by a 12 volt or 24 volt electricity supply via a battery or from the mains electricity supply via a transformer. Alternatively, the spacer collar is separate from the cover or lid and may be connectable therewith by e.g. a push or snap fit guide formations and, where present, the soil tray may also be similarly connectable to the spacer collar and/or the cover or lid.

Preferably, handle means are provided on respectively opposite sides of the cover or lid and/or the spacer, and/or the soil tray, which handle means may include guide or locking formations such as projections or recesses by which the respective parts may be releasably secured together.

Conveniently, a thermostat may be provided, such as on or in the spacer collar, to ensure that the chosen temperature is maintained.

The spacer collar itself may also be electrically heated through the use of electrically conductive heating elements and the tray itself, where present, may also be electrically heated through conventional means, either separately or through a single unified electric circuit.

Conveniently, a sensor may be incorporated into the propagator to sense conditions in which condensation may be induced, such as by a sharp drop in ambient temperature outside the propagator as compared to the air temperature within the propagator, a logic circuit then e.g. automatically switching the heating elements for the transparent cover or lid and/or the spacer collar on in order to prevent or inhibit the build up of condensation, the sensor also sensing when conditions have changed such that the heating circuit may be switched off when an appropriate rise in ambient temperature has been noted.

Conveniently, the handle means may include electrical contact means, such as a socket, for connecting the propagator to an electricity supply, and the handle means may also include switches, sensors and indicators such as electric lights for indicating the status of the propagator e.g. "off" or "on", operating temperature, humidity inside the propagator, and so on.

The invention will now be described, by way of example only, with reference to the accompanying drawings in which:
Figure 1 is a perspective view of the rear of a plant propagator according to the invention,
Figure 2 is a perspective front view of the plant propagator of Figure 1,
Figure 3 is a perspective view of a second, preferred, embodiment of the invention in its assembled state, and
Figure 4 is an exploded view of the embodiment of Figure 3.

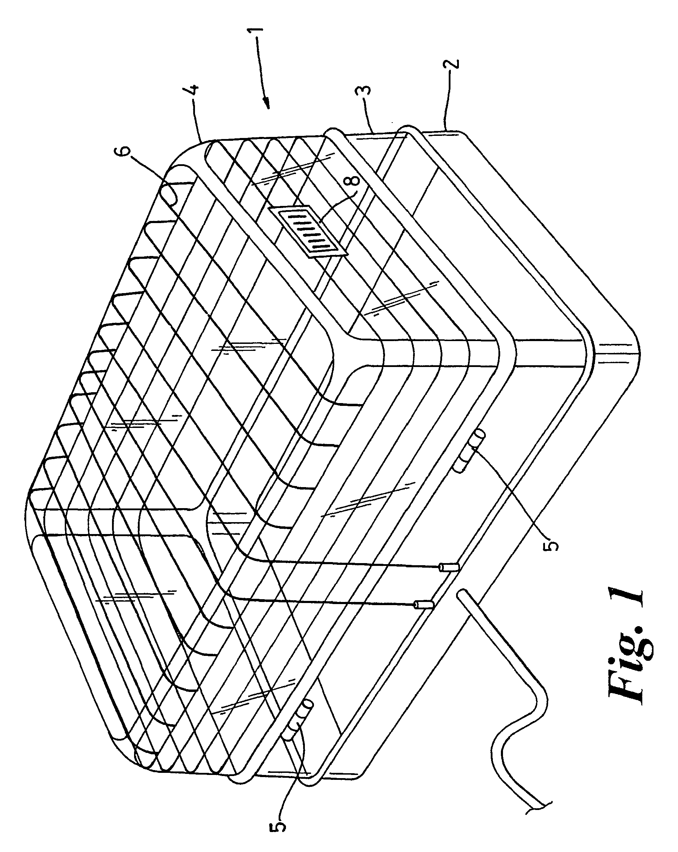

Referring first to Figure 1 a plant propagator shown generally at 1 is in three part form, namely a soil tray 2 for containing soil, a transparent spacer collar 3 and a transparent cover or lid 4. The cover or lid 4 is joined to the collar 3 by a pair of hinges 5 and the collar itself is detachably secured to the outer rim of the tray 2 so as to allow the tray 2 to be filled with soil as required or for existing soil to be replaced.

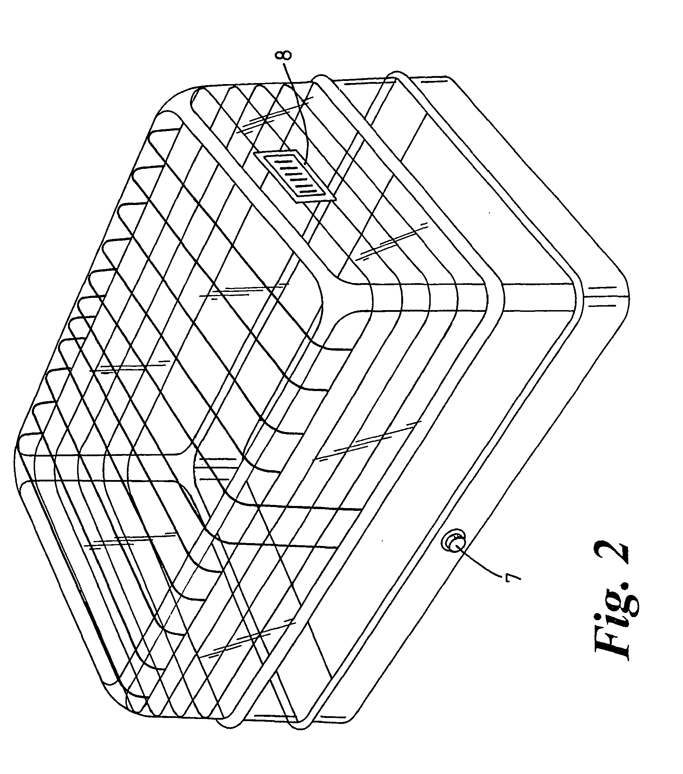

On the inside surface of the cover or lid is an electrically conducting heating grid or element 6 which may be a single flat copper wire extending over all or part of the inside of the cover or lid 4. The heating element 6 is connected to a thermostat 7 (shown in Figure 2) and a power inlet socket (not shown) by which it and the heating element 6 may be electrically activated. This may be by e.g. the insertion of a jackplug connected to a 12 or 24 volt battery (not shown) or where mains electricity is conveniently available a transformer (not shown) may be used to provide an electrical supply of a required voltage if other than mains voltage.

Although it is normally desirable to keep the inside of a propagator warm and moist nevertheless there are occasions when it is preferable to provide ventilation without opening the cover or lid and this is achieved via slidably openable vents 8 around the periphery of the spacer collar 3.

In use, because the heating element 6 is disposed on the inside surface of the cover or lid 4, when it is operating because there is an imbalance between the temperature therewithin and ambient temperature such that the former is higher than the latter, particularly at night, condensation cannot form or if forms it immediately evaporates, thereby avoiding the formation of large droplets of water which could block sunlight, drip onto e.g. seedlings or delicate plants or otherwise act in an undesirable manner of running down the sides of the propagator to wash into the soil in the tray 2 and thereafter evaporate therefrom in a manner illustrative of prior art electrically heated plant propagators.

As well as the thermostat 7, a separate sensor (not shown) may be incorporated within the propagator to sense e.g. a sharp decrease in ambient temperature as opposed to the air temperature within the propagator 1 and through the use of a logic circuit switch the heating element 6 on until the temperature in balance ends, such that if, say, the propagator 1 has conventional under soil heating in the tray 2 the use of the heating element 6 may be selectively employed in order to specifically prevent or inhibit the build up of condensation, or if a conventional heating element is not present in the tray 2 the heating element 6 may heat the soil and air within the propagator 1, thereby dispensing with separate heating for the soil itself.

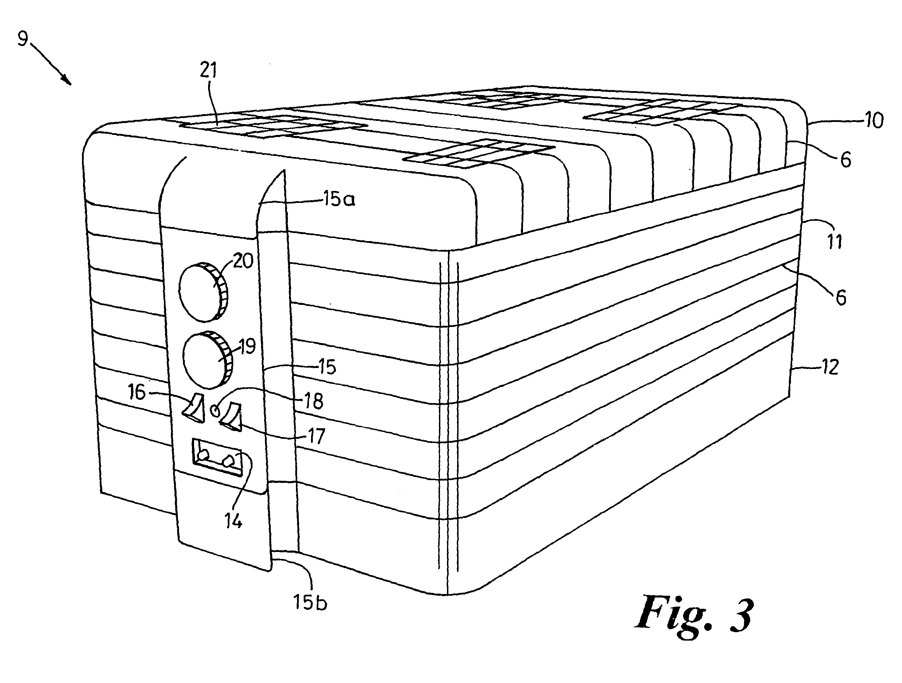

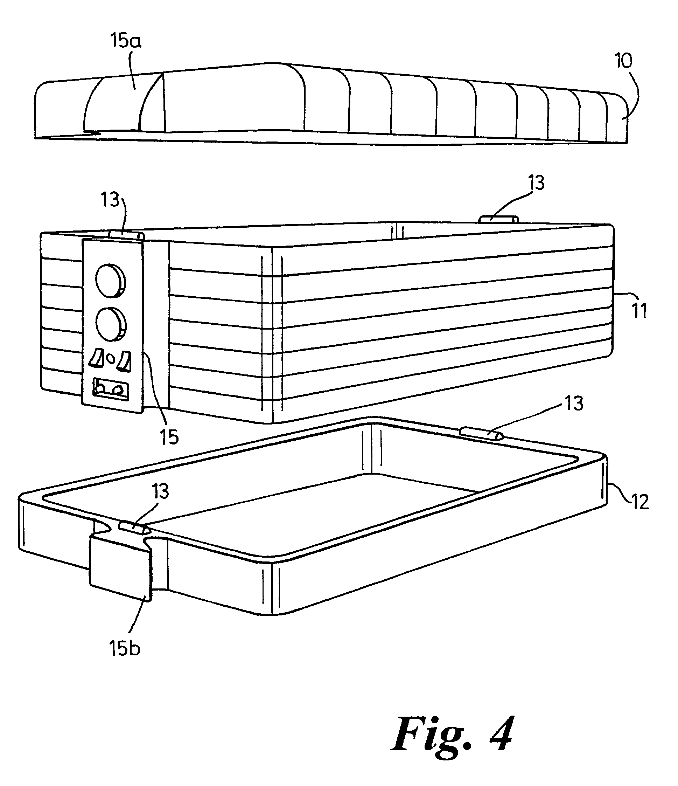

Turning now to the preferred embodiment of invention shown with reference to Figures 3 and 4, a propagator shown generally at 9 includes a generally transparent cover or lid 10, a spacer collar 11 and a soil tray 12, releasably connectable to each other by a push or snap fit by means of guide/locking projections 13 (shown in Figure 4) on respectively opposite upper ends of the collar 11 and soil tray 12 and being engageable within correspondingly shaped recesses (not shown) on the underside of the top or cover 10 and the collar 11.

As with the embodiment shown with reference to Figures 1 and 2, heating elements 6 are disposed on the inside surfaces of, respectively, the cover or lid 10 and the spacer collar 11 and are electrically connectable to a power input socket 14 within handle means 15 which extends continuously to an upper portion 15a of the cover or lid 10 and a lower portion 15b of the soil tray 12, a correspondingly shaped handle (not shown) being disposed on the opposite end of the propagator 9, thereby allowing the entire structure to be easily liftable bya pair of hands.

The handle means 15 on the side of the propagator 9 shown also includes switches 16, 17 for e.g. independently switching on or off the heating elements to the cover or lid 10 and the collar 11, or one of them may instead be used to switch on or off e.g. a heating grid or element (not shown) in the soil tray 12. A power indicator light 18 is also provided to indicate the state of the device e.g. on or off, and rotationally adjustable switches19, 20 are provided for, respectively, temperature setting and temperature control although it will be understood that any suitable configuration may be adopted.

Vents 21 (shown in Figure 3), which may be adjustable, are positioned at spaced intervals on top of the lid or cover 10 although it will be appreciated that they may be positioned elsewhere, such as in the sidewalls of the collar 11, or those of the soil tray 12.

In use, the propagator 9 may be used in the manner as shown with plants growing in soil contained in the soil tray 12, although it will be apparent that where the propagator 9 is to be used to protect existing plants the soil tray 12 may be dispensed with such that the propagator 9 is effectively used as an electrically heatable cloche. Similarly, although only one collar 11 is shown being used, any convenient number of collars may be used, some or all of which may be electrically connectable and heatable as required.

Although the heating elements 6 may be powered from a low voltage source corresponding to voltages typically used in vehicle batteries, nevertheless the invention may also utilise mains voltage, with the heating element 6 effectively being equivalent to e.g. heating elements used to heat electric blankets, the elements themselves being electrically insulated by e.g. plastic film or the like.

The invention, by borrowing technology from the automotive industry, therefore provides a neat and elegant solution to the prior art problems referred to above.

As will be evident to those skilled in the art, various modifications can be made or followed in light of the foregoing disclosure and discussion without departing from the scope of the invention as defined by the appended claims.

## Claims

1. An electrically heated plant propagator (1, 9) comprising or including a transparent cover or lid (4, 10), **characterised in that** the cover or lid has electrically conductive heating elements (6) on or in the inner surface of the cover or lid, the heating elements being connectable to an electric power supply by which the heating element, through resistive heating, heats the inside of the plant propagator when the cover or lid is closed.

2. A propagator (1, 9) according to claim 1 further **characterised in** including a soil tray (2, 12) over which the transparent cover or lid (4, 10) may be placed.

3. A propagator (1, 9) according to claim 2 further **characterised in** including a spacer collar (3, 11) between the cover or lid (4, 10) and the upper rim of the tray (2, 12).

4. A propagator (1, 9) according to claim 3 further **characterised in that** the spacer collar (3, 11) is transparent.

5. A propagator (1, 9) according to claim 3 or claim 4 further **characterised in that** the spacer collar (3, 11) is integral with the cover or lid (4, 10).

6. A propagator (1, 9) according to claim 3 or claim 4 further **characterised in that** the spacer collar (3, 11) is separate from the cover or lid (4, 10).

7. A propagator (1, 9) according to claim 3 or claim 4 when dependent on claim 2 further **characterised in that** the spacer collar, (3, 11) is integral with the tray (2, 12).

8. A propagator (1, 9) according to claim 3 or claim 4 further **characterised in that** the spacer collar (3, 11) is separate from the cover or lid (4, 10) and is connectable therewith by e.g. push or snap fit guide formations (13).

9. A propagator (1, 9) according to claim 8 further **characterised in that** the soil tray (2, 12) is connectable to the spacer collar (3, 11) and/or the cover or lid (4, 10) by e.g. push or snap fit guide formations (13).

10. A propagator (1, 9) according to any preceding claim further **characterised in that** handle means (15) are provided on respectively opposite sides of the cover or lid (4, 10) and/or the spacer collar (3, 11), and/or the soil tray (2, 12).

11. A propagator (1, 9) according to claim 10 further **characterised in that** handle means (15) includes guide or locking formations (13) such as projections or recesses by which the respective parts can be releasably secured together.

12. A propagator (1, 9) according to any preceding claim further **characterised in that** a thermostat (7) is provided, such as on or in the spacer collar (3, 11), to ensure that the chosen temperature is maintained.

13. A propagator (1, 9) according to any preceding claim further **characterised in that** a spacer collar (3, 11) itself is electrically heated through the use of electrically conductive heating elements (6).

14. A propagator (1, 9) according to any one of claims 2 to 13 further **characterised in that** the tray (2, 12), where present, is also electrically heated.

15. A propagator (1, 9) according to any preceding claim further **characterised in that** a sensor is incorporated into the propagator (1, 9) to sense conditions in which condensation may be induced.

16. A propagator (1, 9) according to any preceding claim further **characterised in that** a logic circuit automatically switching the heating elements (6) for the transparent cover or lid (4, 10) and/or the spacer collar (3, 11) on in order to prevent or inhibit the build up of condensation.

17. A propagator (1, 9) according to claim 15 further **characterised in that** the sensor also sensing when conditions have changed such that the heating circuit may be switched off when an appropriate rise in ambient temperature has been noted.

18. A propagator (1, 9) according to claim 10 or claim 11 further **characterised in that** the handle means (15) includes electrical contact means (14), such as a socket, for connecting the propagator (1, 9) to an electricity supply.

19. A propagator (1, 9) according to any one of claims 10, 11 and 18 further **characterised in that** the handle means (15) includes switches (16, 17), sensors and indicators such as electric lights (18) for indicating the status of the propagator e.g. "off" or "on", operating temperature, humidity inside the propagator.

## Patentansprüche

1. Elektrisch beheizte Pflanzenvermehrungsvorrichtung (1, 9) mit einer transparenten Abdeckung oder einem transparenten Deckel (4, 10), **dadurch gekennzeichnet, daß** die Abdeckung oder der Deckel elektrisch leitende Heizelemente (6) auf oder in der inneren Oberfläche der Abdeckung oder des Deckels aufweist, und daß die Heizelemente an eine elektrische Stromquelle anschließbar sind, durch die die Heizelemente durch Widerstandsheizung die Innenseite der Pflanzenvermehrungsvorrichtung erwärmen, wenn die Abdeckung oder der Deckel geschlossen ist.

2. Pflanzenvermehrungsvorrichtung (1, 9) nach Anspruch 1, **dadurch gekennzeichnet, daß** sie eine Erdbodenschale (2, 12) aufweist, über der die transparente Abdeckung oder der transparente Deckel (4, 10) angeordnet werden kann.

3. Pflanzenvermehrungsvorrichtung (1, 9) nach Anspruch 2, **gekennzeichnet durch** einen Abstandskragen (3, 11) zwischen der Abdeckung oder dem Deckel (4, 10) und dem oberen Rand der Erdbodenschale (2, 12).

4. Pflanzenvermehrungsvorrichtung (1, 9) nach Anspruch 3, **dadurch gekennzeichnet, daß** der Abstandskragen (3, 11) transparent ist.

5. Pflanzenvermehrungsvorrichtung (1, 9) nach Anspruch 3 oder 4, **dadurch gekennzeichnet, daß** der Abstandskragen (3, 11) mit der Abdeckung oder dem Deckel (4, 10) ein einheitliches Ganzes bildet.

6. Pflanzenvermehrungsvorrichtung (1, 9) nach Anspruch 3 oder 4, **dadurch gekennzeichnet, daß** der Abstandskragen (3, 11) von der Abdeckung oder dem Deckel (4, 10) getrennt ist.

7. Pflanzenvermehrungsvorrichtung (1, 9) nach Anspruch 3 oder 4 in Abhängigkeit vom Anspruch 2, **dadurch gekennzeichnet, daß** der Abstandskragen (3, 11) mit der Erdbodenschale (2, 12) ein einheitliches Ganzes bildet.

8. Pflanzenvermehrungsvorrichtung (1, 9) nach Anspruch 3 oder 4, **dadurch gekennzeichnet, daß** der Abstandskragen (3, 11) von der Abdeckung oder dem Deckel (4, 10) getrennt ist und mit ihnen durch beispielsweise Druck- oder Schnappsitzführungsausbildungen (13) verbindbar ist.

9. Pflanzenvermehrungsvorrichtung (1, 9) nach Anspruch 8, **dadurch gekennzeichnet, daß** die Erdbodenschale (2, 12) mit dem Abstandskragen (3, 11) und / oder der Abdeckung oder Deckel (4, 10) durch beispielsweise Druck- oder Schnappsitzführungsausbildungen (13) verbindbar ist.

10. Pflanzenvermehrungsvorrichtung (1, 9) nach einem der vorhergehenden Ansprüche, **dadurch gekennzeichnet, daß** auf den entsprechenden gegenüberliegenden Seiten der Abdeckung oder des Deckels (4, 10) und / oder des Abstandskragens (3, 11) und / oder der Erdbodenschale (2, 12) eine Haltereinrichtung (15) vorgesehen ist.

11. Pflanzenvermehrungsvorrichtung (1, 9) nach Anspruch 10, **dadurch gekennzeichnet, daß** die Haltereinrichtung (15) Führungs- oder Verriegelungsausbildungen (13) aufweist, beispielsweise Vorsprünge oder Aussparungen, durch die die entsprechenden Teile lösbar miteinander verbunden werden können.

12. Pflanzenvermehrungsvorrichtung (1, 9) nach einem der vorhergehenden Ansprüche, **dadurch gekennzeichnet, daß** ein Thermostat (7) vorgesehen ist, beispielsweise auf oder in dem Abstandskragen (3, 11), um sicherzustellen, daß die gewählte Temperatur aufrechterhalten wird.

13. Pflanzenvermehrungsvorrichtung (1, 9) nach einem der vorhergehenden Ansprüche, **dadurch gekennzeichnet, daß** ein Abstandskragen (3, 11) selbst durch Benutzung elektrisch leitender Heizelemente (6) elektrisch geheizt wird.

14. Pflanzenvermehrungsvorrichtung (1, 9) nach einem der Ansprüche 2 bis 13, **dadurch gekennzeichnet, daß** die Erdbodenschale (2, 12) dort, wo sie vorhanden ist, ebenfalls elektrisch beheizt wird.

15. Pflanzenvermehrungsvorrichtung (1, 9) nach einem der vorhergehenden Ansprüche, **dadurch gekennzeichnet, daß** ein Sensor in die Pflanzenvermehrungsvorrichtung (1, 9) eingebaut ist, um die Bedingungen festzustellen, unter denen Kondensation eintreten kann.

16. Pflanzenvermehrungsvorrichtung (1, 9) nach einem der vorhergehenden Ansprüche, **dadurch gekennzeichnet, daß** eine Logikschaltung automatisch die Heizelemente (6) für die transparente Abdeckung oder den Deckel (4, 10) und / oder den Abstandskragen (3, 11) einschaltet, um die Ausbildung der Kondensation zu verhindern oder zu hemmen.

17. Pflanzenvermehrungsvorrichtung (1, 9) nach Anspruch 15, **dadurch gekennzeichnet, daß** der Sensor auch feststellt, wenn die Bedingungen sich so ändern, daß die Heizschaltung ausgeschaltet werden kann, wenn ein geeigneter Anstieg der Umgebungstemperatur festgestellt worden ist.

18. Pflanzenvermehrungsvorrichtung (1, 9) nach Anspruch 10 oder 11, **dadurch gekennzeichnet, daß** die Haltereinrichtung (15) eine elektrische Kontaktvorrichtung (14) aufweist, beispielsweise eine Fassung, um die Pflanzenvermehrungsvorrichtung (1, 9) an eine Stromquelle anzuschließen.

19. Pflanzenvermehrungsvorrichtung (1, 9) nach einem der Ansprüche 10, 11 und 18, **dadurch gekennzeichnet, daß** die Haltereinrichtung (15) Schalter (16, 17), Sensoren und Indikatoren aufweist, beispielsweise elektrische Lichter (18), um den Zustand der Vermehrungseinrichtung anzuzeigen, beispielsweise "aus" oder "ein" oder die Betriebstemperatur, Feuchtigkeit im Inneren der Pflanzenvermehrungsvorrichtung.

## Revendications

1. - Propagateur de végétaux (1, 9) chauffé électriquement, comprenant ou incluant un couvercle ou capuchon transparent (4, 10), **caractérisé par le fait que** le couvercle ou capuchon a des éléments chauffants (6) conducteurs de l'électricité sur ou dans la surface interne du couvercle ou capuchon, les éléments chauffants étant aptes à être connectés à une alimentation en courant électrique par laquelle l'élément chauffant, par chauffage résistif, chauffe l'intérieur du propagateur de végétaux lorsque le couvercle ou capuchon est fermé.

2. - Propagateur (1, 9) selon la revendication 1, **caractérisé en outre par le fait qu'**il comprend un plateau de terre (2, 12) sur lequel le couvercle ou capuchon transparent (4, 10) peut être placé.

3. - Propagateur (1, 9) selon la revendication 2, **caractérisé en outre par le fait qu'**il comprend un collier espaceur (3, 11) entre le couvercle ou capuchon (4, 10) et le rebord supérieur du plateau (2, 12).

4. - Propagateur (1, 9) selon la revendication 3, **caractérisé en outre par le fait que** le collier espaceur (3, 11) est transparent.

5. - Propagateur (1, 9) selon la revendication 3 ou la revendication 4, **caractérisé en outre par le fait que** le collier espaceur (3, 11) est d'un seul tenant avec le couvercle ou capuchon (4, 10).

6. - Propagateur (1, 9) selon la revendication 3 ou la revendication 4, **caractérisé en outre par le fait que** le collier espaceur (3, 11) est séparé du couvercle ou capuchon (4, 10).

7. - Propagateur (1, 9) selon la revendication 3 ou la revendication 4, lorsqu'elles dépendent de la revendication 2, **caractérisé en outre par le fait que** le collier espaceur (3, 11) est d'un seul tenant avec le plateau (2, 12).

8. - Propagateur (1, 9) selon la revendication 3 ou la revendication 4, **caractérisé en outre par le fait que** le collier espaceur (3, 11) est séparé du couvercle ou capuchon (4, 10) et est apte à être connecté avec lui par exemple par des formations de guidage (13) à ajustement par poussée ou par encliquetage.

9. - Propagateur (1, 9) selon la revendication 8, **caractérisé en outre par le fait que** le plateau de terre (2, 12) est apte à être connecté au collier espaceur (3, 11) et/ou au couvercle ou capuchon (4, 10) par exemple par des formations de guidage (13) à ajustement par poussée ou par encliquetage.

10. - Propagateur (1, 9) selon l'une quelconque des revendications précédentes, **caractérisé en outre par le fait que** des moyens de poignée (15) sont disposés sur des côtés respectivement opposés du couvercle ou capuchon (4, 10) et/ou du collier espaceur (3, 11), et/ou du plateau de terre (2, 12).

11. - Propagateur (1, 9) selon la revendication 10, **caractérisé en outre par le fait que** des moyens de poignée (15) comprennent des formations de guidage ou de verrouillage (13), telles que des projections ou cavités par lesquelles les parties respectives peuvent être fixées ensemble de façon libérable.

12. - Propagateur (1, 9) selon l'une quelconque des revendications précédentes, **caractérisé en outre par le fait qu'**un thermostat (7) est prévu, par exemple sur ou dans le collier espaceur (3,11) pour assurer que la température choisie est maintenue.

13. - Propagateur (1, 9) selon l'une quelconque des revendications précédentes, **caractérisé en outre par le fait qu'**un collier espaceur (3, 11) lui-même est chauffé électriquement par utilisation d'éléments chauffants (6) conducteurs de l'électricité.

14. - Propagateur (1, 9) selon l'une quelconque des revendications 2 à 13, **caractérisé en outre par le fait que** le plateau (2, 12), s'il est présent, est également chauffé électriquement.

15. - Propagateur (1, 9) selon l'une quelconque des revendications précédentes, **caractérisé en outre par le fait qu'**un détecteur est incorporé dans le propagateur (1, 9) pour détecter des conditions dans lesquelles une condensation peut être induite.

16. - Propagateur (1, 9) selon l'une quelconque des revendications précédentes, **caractérisé en outre par** un circuit logique mettant automatiquement en route les éléments chauffants (6) pour le couvercle ou capuchon transparent (4, 10) et/ou le collier espaceur (3, 11) de façon à empêcher ou bloquer l'accumulation de condensation.

17. - Propagateur (1, 9) selon la revendication 15, **caractérisé en outre par le fait que** le détecteur détecte également lorsque des conditions ont changé de telle sorte que le circuit de chauffage peut être coupé lorsqu'une montée appropriée en température ambiante a été notée.

18. - Propagateur (1, 9) selon la revendication 10 ou la revendication 11, **caractérisé en outre par le fait que** le moyen de poignée (15) comprend des moyens de contact électrique (14), tels qu'une douille, pour connecter le propagateur (1, 9) à une alimentation en électricité.

19. - Propagateur (1, 9) selon l'une quelconque des revendications 10, 11 et 18, **caractérisé en outre par le fait que** le moyen de poignée (15) comprend des commutateurs (16, 17), des détecteurs et des indicateurs tels que des lampes électriques (18) pour indiquer l'état du propagateur, par exemple « arrêt » ou « marche », la température de fonctionnement, l'humidité intérieure du propagateur.
